(19) Europäisches Patentamt

European Patent Office

Office européen des brevets

(11) Veröffentlichungsnummer: **0 438 725 A2**

# (12) EUROPÄISCHE PATENTANMELDUNG

(21) Anmeldenummer: **90124415.2**

(22) Anmeldetag: **17.12.90**

(51) Int. Cl.⁵: **C08G 59/18, C09J 163/00**

(30) Priorität: **19.01.90 DE 4001417**

(43) Veröffentlichungstag der Anmeldung:
**31.07.91 Patentblatt 91/31**

(84) Benannte Vertragsstaaten:
**DE ES FR GB IT**

(71) Anmelder: **Beiersdorf Aktiengesellschaft
Unnastrasse 48
W-2000 Hamburg 20(DE)**

(72) Erfinder: **Kramer, Jürgen, Dr.
Stieglitzweg 30
W-2107 Rosengarten(DE)**
Erfinder: **Engeldinger, Hans-Karl
Holtwisch 12
W-2000 Hamburg 54(DE)**
Erfinder: **Siepmann, Jürgen
Kirchenstrasse 7
W-2082 Moorrege(DE)**

(54) Zähelastifizierter, zweikomponentiger Epoxidharzklebstoff.

㊄ Zähelastifizierter, zweikomponentiger Epoxidharzklebstoff auf Basis Epoxidharz und Amin-Härter, dadurch gekennzeichnet, daß das Epoxidharz mit epoxi-funktionellen, kautschuk-elastischen Oligomeren oder Polymeren modifiziert ist, und ein Farbindikator enthalten ist, der ein homogenes Mischen von Harz und Härter durch Farbumschlag anzeigt, wobei ein Volumenteil Harz pro ein Volumenteil Härter vorgesehen ist.

EP 0 438 725 A2

## ZÄHELASTIFIZIERTER, ZWEIKOMPONENTIGER EPOXIDHARZKLEBSTOFF

Die Erfindung betrifft einen zähelastifizierten, zweikomponentigen Epoxidharzklebstoff.

Konventionelle Reaktionsklebstoffe auf Epoxidharz-Basis mit DGE-Bisphenolen als Harze und aminischen Härtern vernetzen zu sprödharten Endprodukten. Entsprechende Verklebungen, beispielsweise von Aluminiumblechen, weisen hohe Zugscherfestigkeiten auf, dagegen nur geringe Schälwiderstände. Sie sind empfindlich gegen Schlag- und Schwingungsbelastungen schon bei Raumtemperatur, in verstärktem Maße in der Kälte.

Durch Flexibilisierung, z.B. durch Zusatz von Weichmachern, wird die Vernetzungsdichte von Epoxidharzen verringert. Damit verliert das System an Sprödigkeit - es resultiert daraus erhöhter Schälwiderstand und Verringerung der Schlagempfindlichkeit, allerdings auf Kosten deutlich verminderter Zugscherfestigkeit. Besonders die Festigkeit in der Wärme wird durch diese Maßnahme stark herabgesetzt. Zudem wird das Alterungsverhalten durch die chemisch nicht oder nur einseitig gebundenen Weichmacher verschlechtert.

In der Literatur bekannt sind Epoxi-Systeme, bei denen eine Verbesserung der Eigenschaften durch chemischen Einbau von elastischen Bestandteilen erzielt wird. Es sind fast ausschließlich einkomponentige, heißhärtbare Gießharze oder Klebstoffe auf dieser Basis beschrieben.

Es sind auch bereits zähelastische Epoxidharze bekannt geworden. So beschreibt die WO 87/06243 ein solches, das jedoch recht begrenzt einsatzfähig mit einem Mischungsverhältnis Harz zu Härter von 5 zu 1 ist.

Aufgabe der Erfindung war es, hier Abhilfe zu schaffen, insbesondere einen lösungsmittelfreien, zweikomponentigen, kalthärtenden Reaktionsklebstoff auf Epoxidharz-Basis zu schaffen, der sehr hohe Festigkeiten gegen dynamische und schlagartige Belastungen sowie sehr hohe Schälwiderstände von Klebungen ergibt, bei zugleich hohem Niveau an Zugscherfestigkeit, der zudem auch im Kältebereich hohe Festigkeiten ergibt, die exakte Dosierung von Harz und Härter durch das praxisfreundliche Mischungsverhältnis von 1 : 1 Volumenteilchen leicht einzuhalten erlaubt, und der den Homogenitätsgrad der Harz/Härter-Mischung durch einen Farbumschlag leicht kontrollierbar macht.

Gelöst wird diese Aufgabe durch den in den Ansprüchen näher gekennzeichneten Epoxidharzklebstoff.

Es stellte sich überraschend heraus, daß eine Zähelastifizierung konventioneller zweikomponentiger Epoxidharzklebstoffe insbesondere durch Einführung von Epoxidgruppen enthaltendem Nitrilkautschuk herbeigeführt wird, wobei zugleich die Einhaltung eines Harz/Härter-Verhältnisses von 1 : 1 Volumenteilen möglich ist und zudem ein vorzugsweise chemisch bedingter Farbumschlag bei dem Vermischen von Harz und Härter als Indikator für die Homogenität erzielt werden kann.

Die Zähelastifizierung von zweikomponentigen kalthärtbaren Epoxidharzklebstoffen wird durch die Einführung von kautschukelastischen Oligomeren oder Polymeren in die Harzkomponente erreicht, welche endständige Epoxidgruppen enthalten. Im Abbindeprozeß werden die Elastomeren an den aminischen Härter chemisch gebunden. Aufgrund der dabei auftretenden Unverträglichkeit segregieren sie in Form diskreter Elastomerpartikel in der vernetzenden Epoxidharz-Matrix. Es entsteht ein Zweiphasensystem aus hochfestem Epoxidharz, in den die Elastomerteilchen Bruchenergie dissipieren und Risse bremsen bzw. stoppen können.

Gegenüber einem konventionellen Epoxidharzklebstoff zeichnet sich der erfindungsgemäße Klebstoff aus durch

- gleiche oder signifikant höhere Zugscherfestigkeiten, gemessen bei Raumtemperatur (gemäß DIN 53283),
- ca. 10fach höhere Schälwiderstände, gemessen bei Raumtemperatur (gemäß DIN 53289),
- 5- bis 7mal höhere Bruchenergie bei Raumtemperatur, gemessen an Prüfkörpern für die Kerbschlagzähigkeit (gemäß DIN 53453),
- im Temperaturbereich von 0 - bis -40° C zwischen 30 und 50% höhere Zugscherfestigkeiten (gemäß DIN 53283).

Diese Eigenschaften eröffnen dem erfindungsgemäßen Klebstoff Einsatzgebiete, die bisher den klebtechnischen Fügeverfahren verschlossen blieben, in denen vor allem geschweißt oder genietet wird. Die konventionellen Epoxidharzklebstoffe zeigen sich als zu sprödhart; die elastischeren Polyurethane weisen ungenügend hohe Festigkeit auf, vor allem in der Wärme.

Solche Einsatzgebiete finden sich im Automobilbau, z.B. beim Einkleben von Versteifungsblechen im Karosseriebereich, aber auch im Maschinenbau und bei anderen konstruktiven Verbindungen.

Das genaue Einhalten der vorgeschriebenen Dosierung ist bei Zweikomponenten-Klebstoffen die Voraussetzung für ein qualitativ gleichbleibend gutes Ergebnis der Klebung. Das für den erfindungsgemäßen Klebstoff eingestellte Mischungsverhältnis von 1 : 1 Volumenteilen bringt erhebliche Vorteile, z.B.

- Auftrag gleicher Stranglängen von Harz und Härter bei Verarbeitung aus der Tube,
- keine Dosierfehler bei Verwendung von Zweikammerkartuschen mit entsprechender Doppelkolbenpistole,
- einfache automatische Dosieranlagen, da Pumpen mit gleichen Kolben und Leitungen bzw. Schläuche mit gleichen Querschnitten verwendet werden können.

Auch die homogene Vermischung von Harz und Härter ist für die Güte der Verklebung sehr wichtig. Vorteilhaft ist das erfindungsgemäße Klebharz mit einem Farbindikator ausgerüstet, der insbesondere durch chemische Reaktion mit der Härterkomponente entfärbt wird. Dies bedeutet einen Farbumschlag von z.B. rot nach farblos während des Vermischens.

Die Homogenität der Mischung zeigt sich daran, daß keine Farbschlieren mehr vorhanden sind, sondern daß die Mischung einheitlich entfärbt ist. Dies gibt dem Anwender die notwendige Sicherheit bei der Klebstoffverarbeitung.

Andererseits kann der Klebstofflieferant im Falle einer Reklamation nachträglich feststellen, ob eine homogene Mischung vorgelegen hatte oder nicht.

Ggf. kann auf einen Farbindikator auch ganz verzichtet werden, wobei dann allerdings auf die geschilderten Vorteile verzichtet wird.

Das erfindungsgemäße Klebharz kann wie folgt hergestellt werden:

Feste und/oder flüssige Epoxidharze, z.B. auf der Basis von Diglycidylether von Bisphenol-A oder -F oder Mischungen aus beiden werden zunächst chemisch umgesetzt mit einem Unterschuß an carboxylgruppenhaltigen flüssigen Elastomeren. Solche Oligomere können auf der Basis von Polyethern, Polyurethanen oder Acrylnitrilen aufgebaut sein. Die Reaktion läuft bei Temperaturen über 100 °C und Katalyse mit Triphenylphosphin oder Tetramethylammoniumchlorid glatt und quantitativ ab.

Das Reaktionsprodukt kann zur Konsistenzgebung mit reaktiven Verdünnern oder mit Verdickungsmitteln, z.B. hydrophilen oder hydrophoben, feindispersen Kieselsäuren bzw. mineralischen oder organischen Füll- und Faserstoffen versetzt werden. Dabei ist zu beachten, daß eine stöchiometrische Äquivalenz der Epoxidgruppen im fertig formulierten Harz zu den primären Aminogruppen im Härter gewährleistet ist.

Als Farbstoff wird vorzugsweise eine geringe Menge einer Verbindung aus der Klasse der Phthaleine, z.B. Eosin, Fluorescein, Phenolphthalein oder Rhodamin zugesetzt. Zu beachten ist, daß der Farbstoff im Epoxidharz löslich ist, und daß er im nichtwäßrigen Medium seine Farbe verändert oder verliert, wenn er durch Reaktion mit dem aminischen Härter vom sauren in den neutralen Zustand übergeht.

Das erfindungsgemäße Produkt ist insbesondere wie folgt zusammengesetzt (Gewichtsprozent):

```
flüssiges Epoxidharz   40    - 80    vorzugsw. 55     - 70

festes Epoxidharz      5     - 25    vorzugsw. 10     - 20

flüssiges Elastomer    5     - 20    vorzugsw. 8      - 12

Katalysator            0,01  - 0,10  vorzugsw. 0,02   - 0,06

reaktiver Verdünner    0     - 10    vorzugsw. 4      - 8

Füllstoff              0     - 50    vorzugsw. 20     - 40

reaktiver Farbstoff    0,01  - 0,10  vorzugsw. 0,02   - 0,06
```

neben entsprechenden Mengen an sich bekannter Amin-Härter.


Beispiel


```
680   g flüssiges Epoxidharz (Rütapox 0161)

140   g festes Epoxidharz (Rütapox 0191)

120   g flüssiges Elastomer (Hycar 1300x13)

0,3 g Katalysator (Triphenylphosphin)
```

wurden unter Rühren auf 100°C erwärmt und 90 Minuten lang weitergerührt. Während des Abkühlens wurden zusätzlich

```
   25   g reaktiver Verdünner (Merginat EP) und
   0,2 g Farbstoff           (Rhodamin B)
```

eingerührt. Das fertige, homogene Produkt wurde nach dem Abkühlen als Harzkomponente zu gleichen Volumenteilen mit einem aminischen Härter, z.B. Polyaminoamid, vermischt. Während des Verrührens verlor die Mischung ihre intensiv rote Färbung.

Die Topfzeit von 100 g dieser Klebstoffmischung betrug ca. 75 Minuten. An Verklebungen von geätztem Aluminiumblech wurden nach 2 Tagen Härtung bei Raumtemperatur hervorragende Ergebnisse gemessen.

**Patentansprüche**

1. Zähelastifizierter, zweikomponentiger Epoxidharzklebstoff auf Basis Epoxid-Harz und Amin-Härter, dadurch gekennzeichnet, daß das Epoxid-Harz mit epoxi-funktionellen, kautschuk-elastischen Oligomeren oder Polymeren modifiziert ist, und ein Farbindikator enthalten ist, der ein homogenes Mischen von Harz und Härter durch Farbumschlag anzeigt, wobei ein Volumenteil Harz pro ein Volumenteil Härter vorgesehen ist.

2. Epoxidharzklebstoff nach Anspruch 1, dadurch gekennzeichnet, daß das Epoxidharz aus modifizierten Bisphenol-Diglycidylethern besteht, modifiziert mit epoxi-funktionellen, kautschuk-elastischen Oligomeren oder Polymeren auf der Basis Polyether, Polyurethan oder Acrylnitril bzw. Silikonkautschuk, vorzugsweise aber Nitrilkautschuk.

3. Epoxidharzklebstoff nach Anspruch 1, dadurch gekennzeichnet, daß als Farbindikator ein Phthalein, insbesondere Rhodamin, verwendet wird.

4. Epoxidharzklebstoff nach Anspruch 1, dadurch gekennzeichnet, daß Harz und Härter so abgestimmt sind, daß eine Volumendosierung von 1 : 1 einem stöchiometrischen Gleichgewicht der Aminogruppen zu den Epoxidgruppen entspricht.

5. Epoxidharzklebstoff nach Anspruch 1, dadurch gekennzeichnet, daß er als weitere Komponenten, wie Verdünner, Verdicker oder dergleichen enthält.

6. Epoxidharzklebstoff nach Anspruch 1, dadurch gekennzeichnet, daß er im Epoxid-Harz 40 - 80, insbesondere 55 - 70 Gew.-% flüssiges Epoxidharz neben 5 - 25, insbesondere 10 - 20 Gew.-% festes Epoxidharz und 5 - 20, insbesondere 8 - 12 Gew.-% Elastomer, insbesondere flüssiges Elastomer, enthält.

7. Epoxidharzklebstoff nach Anspruch 1, dadurch gekennzeichnet, daß er 0,01 - 0,10, insbesondere 0,02 - 0,06 Gew.-% Farbindikator enthält, bzw. ganz frei von Farbindikator ist.